# EUROPEAN PATENT APPLICATION

(11) **EP 4 715 392 A1**
(43) Date of publication of application: **25.03.2026**
(21) Application number: 25808053.0
(22) Date of filing: 21.05.2025
(51) Int. Cl.: G01N 35/10, G01N 1/34, G01N 1/02, G01N 1/40, G01N 1/44, G01N 1/38

(54) **PRETREATMENT SYSTEM AND PRETREATMENT METHOD FOR MEASURING ACTIVE INGREDIENT**

(30) Priority: 21.05.2024 KR 20240066013; 21.05.2024 KR 20240066014; 21.05.2024 KR 20240066015
(71) Applicant: LG Chem, Ltd., Seoul 07336 (KR)
(72) Inventor: KIM, Yunpyo, Daejeon 34122 (KR); LEE, Yeon Hwa, Daejeon 34122 (KR); PARK, Jeseob, Daejeon 34122 (KR); BAE, Yongjin, Daejeon 34122 (KR); PARK, Se Jung, Daejeon 34122 (KR); KANG, Hosung, Daejeon 34122 (KR); SHIM, Hyerin, Daejeon 34122 (KR); SHIN, Minhwa, Daejeon 34122 (KR)
(74) Representative: Plasseraud IP
(86) International application number: PCT/KR2025/006912
(87) International publication number: WO 2025/244420

(57) **Abstract**

A pre-treating system for measuring an effective component is disclosed. The pre-treating system for measuring the effective component may include a cartridge station on which at least one cartridge is mounted; a pipetting device configured to inject a sample or a standard sample into an inside of the at least one cartridge; a vial shaker on which at least one first vial containing a sample to be analyzed and a second vial containing a standard sample having known characteristics including component and concentration are mounted, the vial shaker being configured to shake the mounted first and second vials; a drying chamber in which at least one reservoir is mounted and configured to dry a solution in the at least one reservoir; and a reservoir processing unit configured to be selectively coupled to the at least one reservoir to spray a solvent into the at least one reservoir.

A pre-treating method executed using the pre-treating system is further disclosed.

## Description

### [Technical Field]

### CROSS-REFERENCE TO RELATED APPLICATION

This application claims priority to and the benefit of Korean Patent Application No. 10-2024-0066013 filed with the Korean Intellectual Property Office on May 21, 2024, Korean Patent Application No. 10-2024-0066014 filed with the Korean Intellectual Property Office on May 21, 2024, and Korean Patent Application No. 10-2024-0066015 filed with the Korean Intellectual Property Office on May 21, 2024, the entire contents of which are incorporated herein by reference.

The present disclosure relates to a pre-treating system and a pre-treating method for measuring an effective component, and more specifically, to a pre-treating system and a pre-treating method for measuring an effective component in waste, which may minimize a deviation in analysis results and improve analysis efficiency by automating a long and complicated pre-treating process for detecting a trace amount of an effective component included in waste.

### [Background Art]

Dioxins may be generated when organic compounds containing chlorine are burned, and mainly occur when waste is incinerated. Due to the toxicity problem of dioxins contained in waste, the importance of regulation and management of dioxin emission has been increased. Accordingly, a process of detecting and quantifying a trace amount of dioxin contained in waste is required.

Generally, in order to analyze dioxin compounds, an extraction step of extracting dioxin compounds from a sample, a purification step for removing interfering substances from an extract, and a concentration step of concentrating an eluate are sequentially performed. Among these three pre-treating steps, the purification step and the concentration step take a long time and are performed manually, so they depend on the skill level of a worker. Accordingly, analysis results may vary depending on the analyst.

The above information disclosed in this Background section is only for enhancement of understanding of the background of the invention, and therefore it may contain information that does not form the prior art that is already known in this country to a person of ordinary skill in the art.

### [Disclosure]

### [Technical Problem]

An embodiment of the present disclosure provides a pre-treating system and a pre-treating method for measuring an effective component in waste that automate a long and complex pre-treating process for detecting a trace amount of an effective component contained in waste.

### [Technical Solution]

An embodiment of the present disclosure provides a pre-treating system for measuring an effective component, including: a cartridge station on which at least one cartridge is mounted; a pipetting device configured to inject a sample or a standard sample into an inside of the at least one cartridge; a vial shaker on which at least one first vial containing a sample to be analyzed and a second vial containing a standard sample having known characteristics including component and concentration are mounted, the vial shaker being configured to shake the mounted first and second vials; a drying chamber in which at least one reservoir is mounted and configured to dry a solution in the at least one reservoir; and a reservoir processing unit configured to be selectively coupled to the at least one reservoir to spray a solvent into the at least one reservoir, wherein an upper end portion of the at least one reservoir is selectively coupled to a lower end portion of the at least one cartridge such that each reservoir is in fluid communication with a corresponding cartridge, and a collection vial that is in fluid communication with a corresponding reservoir is detachably coupled to a lower end of each reservoir.

The pre-treating system may further include a pipetting device transfer device configured to transfer the pipetting device at least between a vial shaker and a cartridge station.

The pipetting device may include a pipette module body; a pipette piston that is relatively movable in a vertical direction with respect to the pipette module body; and a pipette push actuator configured to be movable in a vertical direction to press an upper end of the pipette piston.

The pipette push actuator may press an upper end of the pipette piston two to three times to collect the sample while a pipette tip mounted on a lower end portion of the pipette piston is immersed in the sample in the first vial.

The pipette piston may be elastically mounted on the pipette module body.

The pre-treating system may further include a cartridge purifying device configured to be selectively coupled to an upper end portion of the at least one cartridge to spray a solvent into the at least one cartridge.

The cartridge purifying device may be further configured to spray a gas into at least one cartridge.

The pre-treating system may further include a conditioning drain unit configured to be selectively coupled to a lower end portion of at least one cartridge to discharge a solvent sprayed from the cartridge purifying device and flowing out of the cartridge.

The pre-treating system may further include a vial capping device configured to separate a vial cap from at least one of the first and second vials mounted on the vial shaker or couple a vial to at least one of the first and second vials.

The vial capping device may include a vial cap gripper including a pair of fingers that is able to move toward each other to grip the vial cap or move away from each other to release the vial cap; a pair of vial grip fingers that are able to move toward each other to grip the vial or move away from each other to release the vial; and a cap gripper transfer actuator that moves the cap gripper in a vertical direction.

The cartridge may contain beads that adsorb impurities.

The pre-treating system may further include a reservoir rotating device configured to be operatively connected to at least one reservoir mounted in the drying chamber to rotate the at least one reservoir.

The reservoir processing unit may further be configured to spray a gas into at least one reservoir.

The pre-treating system may further include a hot air source that supplies hot air to the drying chamber.

The reservoir processing unit may be configured to spray a solvent toward a wall of at least one reservoir.

The pre-treating system may further include a level sensor configured to measure a level of a solution in at least one reservoir.

The pre-treating system may further include a controller configured to be communicatively connected to a pipetting device, a vial shaker, a drying chamber, and a reservoir processing unit and to control operations of the pipetting device, the vial shaker, the drying chamber, and the reservoir processing unit.

Another embodiment of the present disclosure provides a pre-treating method for measuring an effective component, including: coupling at least one reservoir mounted in a drying chamber to a lower end portion of at least one cartridge mounted in a cartridge station; injecting a sample into the at least one cartridge using a pipetting device; injecting a standard sample into the at least one cartridge using the pipetting device; eluting the sample and the standard sample in the at least one cartridge to at least one reservoir; separating at least one reservoir mounted in the drying chamber from at least one cartridge; and drying a solution in the at least one reservoir using the drying chamber.

The cartridge may contain beads that adsorb impurities.

The pre-treating method may further include collecting a sample with a pipetting device before the injecting of the sample into the at least one cartridge, wherein the collecting of the sample with the pipetting device may include pressing an upper end of a pipette piston that is relatively movable in a vertical direction with respect to a pipette module body two to three times.

The pre-treating method may further include, before the coupling of the at least one reservoir mounted in the drying chamber to the lower end portion of the at least one cartridge mounted in the cartridge station, coupling a cartridge purifying device to an upper end portion of the at least one cartridge; and spraying a solvent into the at least one cartridge using the cartridge purifying device.

The pre-treating method may further include, before the spraying of the solvent into the at least one cartridge using the cartridge purifying device, coupling a conditioning drain unit to a lower end portion of the at least one cartridge.

The eluting of the sample and the standard sample in the at least one cartridge to the at least one reservoir may include coupling a cartridge purifying device to an upper end portion of the at least one cartridge; and spraying a solvent into the at least one cartridge using the cartridge purifying device.

The pre-treating method may further include spraying a gas into the at least one cartridge using the cartridge purifying device.

The drying of the solution in the at least one reservoir using the drying chamber may be performed by blowing hot air into the drying chamber.

The drying of the solution in the at least one reservoir using the drying chamber may include rotating the at least one reservoir using a reservoir rotating device operatively connected to the reservoir.

The drying of the solution in the at least one reservoir using the drying chamber may further include coupling a reservoir processing unit to the at least one reservoir; and spraying a solvent into the at least one reservoir using the reservoir processing unit.

The drying of the solution in the at least one reservoir using the drying chamber may further include spraying a gas into the at least one reservoir using the reservoir processing unit.

In an aspect, the pre-treating method may further include terminating, by a controller, the drying in response to a level of the solution in the at least one reservoir reaching a set level.

In another aspect, the pre-treating method may further include terminating, by a controller, the drying in response to a time during which the drying has been performed reaching a set time.

### [Advantageous Effects]

According to the present disclosure, a long and complicated pre-treating process may be automated to prevent analysis results from varying depending on the skill level of an analyst.

In addition, by automating the pre-treating process, the pre-treating time may be shortened and the efficiency of analysis may be improved.

In addition, the effects that may be obtained or expected from the embodiments of the present disclosure will be directly or implicitly disclosed in the detailed description of the present disclosure. That is, various effects expected from the embodiments of the present disclosure will be described in the following detailed description.

### [Description of the Drawings]

The embodiments herein may be better understood by referring to the following description in conjunction with the accompanying drawings in which like reference numerals indicate identical or functionally similar elements, of which:
FIG. 1 is a schematic perspective view of a pre-treating system according to an embodiment of the present disclosure.
FIG. 2 is a schematic perspective view illustrating components of a pre-treating system according to an embodiment of the present disclosure, which are disposed in a housing.
FIG. 3 is a perspective view of a pipetting device and a vial capping device according to an embodiment of the present disclosure.
FIG. 4 is a perspective view of a vial capping device according to an embodiment of the present disclosure.
FIG. 5 is a side view of a vial capping device according to an embodiment of the present disclosure.
FIG. 6 is a perspective view of a vial shaker according to an embodiment of the present disclosure.
FIG. 7 is a perspective view of a cartridge station according to an embodiment of the present disclosure.
FIG. 8 is a perspective view of a cartridge purification unit according to an embodiment of the present disclosure.
FIG. 9 is a perspective view of a first nozzle according to an embodiment of the present disclosure.
FIG. 10 is a plan view of a cartridge purification unit according to an embodiment of the present disclosure.
FIG. 11 is a cross-sectional view taken along line A-A of FIG. 10.
FIG. 12 is a perspective view of a sample concentration device according to an embodiment of the present disclosure.
FIG. 13 is a schematic diagram illustrating an operation of a sample concentration device according to an embodiment of the present disclosure, in which a cartridge is shown in a state of being coupled to a cartridge purification unit and a conditioning drain unit.
FIG. 14 is a schematic diagram illustrating an operation of a sample concentration device according to an embodiment of the present disclosure, in which a reservoir processing unit, a second nozzle, and a drying chamber are shown in a state of being coupled to each other.
FIG. 15 is a cross-sectional view taken along line B-B of FIG. 14.
FIG. 16 is a schematic diagram illustrating a process of concentrating an eluate according to an embodiment of the present disclosure.
FIG. 17 is a schematic diagram illustrating an operation of a sample concentration device according to an embodiment of the present disclosure, in which a drying chamber is shown in a raised state.
FIG. 18 is a top plan view of a drying chamber according to an embodiment of the present disclosure.
FIG. 19 is a cross-sectional view taken along line C-C of FIG. 18.
FIG. 20 is a perspective view illustrating the bottom of a drying chamber according to an embodiment of the present disclosure.
FIG. 21 is a flowchart of a pre-treating method according to another embodiment of the present disclosure.

It should be understood that the above-referenced drawings are not necessarily to scale, presenting a somewhat simplified representation of various preferred features illustrative of the basic principles of the disclosure. The specific design features of the present disclosure, including, for example, specific dimensions, orientations, locations, and shapes, will be determined in part by the particular intended application and use environment.

### [Mode for Invention]

The terminology used herein is for the purpose of describing particular embodiments only and is not intended to be limiting of the present disclosure. As used herein, the singular forms "a," "an," and "the" are intended to include the plural forms as well, unless the context clearly indicates otherwise. The terms "include" and/or "including" and "comprise" and/or "comprising" specify the presence of the mentioned characteristics, integers, steps, operations, constituent elements, and/or components when used in the present specification, but it will also be understood that this does not exclude the presence or addition of one or more of other characteristics, integers, steps, operations, constituent elements, components, and/or groups thereof. As used herein, the term "and/or" includes any one or all combinations of the associated and listed items.

In addition, it is understood that one or more of the methods below or the aspects thereof may be executed by at least one or more controllers. The term "controller" may refer to a hardware device including a memory and a processor. The memory is configured to store program commands, and the processor is specially programmed so as to execute program commands to perform one or more processes described in more detail below. The controller may control operations of units, modules, components, devices, or similar matters thereof as described herein. Further, it is understood that the following methods may be executed by a device including a controller together with one or more other components as recognized by those skilled in the art.

Further, the controller of the present disclosure may be implemented as a non-transitory computer readable recording medium including program commands executable by a processor. Examples of the computer readable recording medium includes a read only memory (ROM), a random access memory (RAM), a compact disc (CD) ROM, magnetic tapes, floppy discs, flash drives, smart cards, and optical data storage devices, but the computer readable recording medium is not limited thereto. The computer readable recording medium may also be dispersed across the computer network to store and execute program commands by a distributed method, such as a telematics server or a controller arear network (CAN).

Hereinafter, an embodiment of the present disclosure will be described in detail with reference to the accompanying drawings.

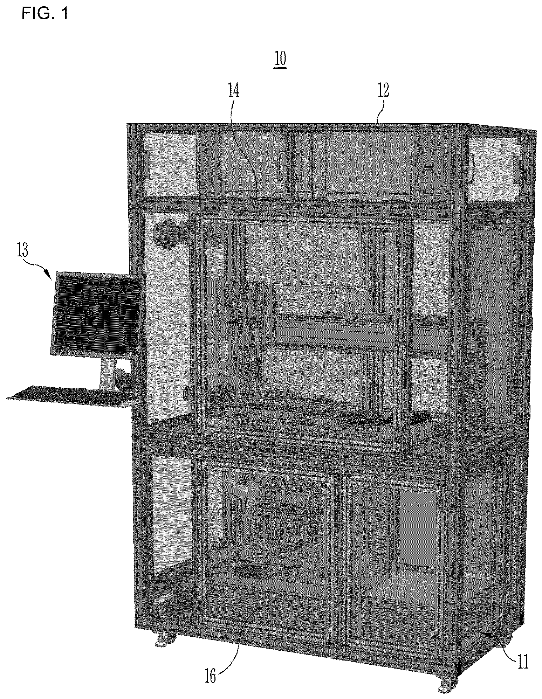

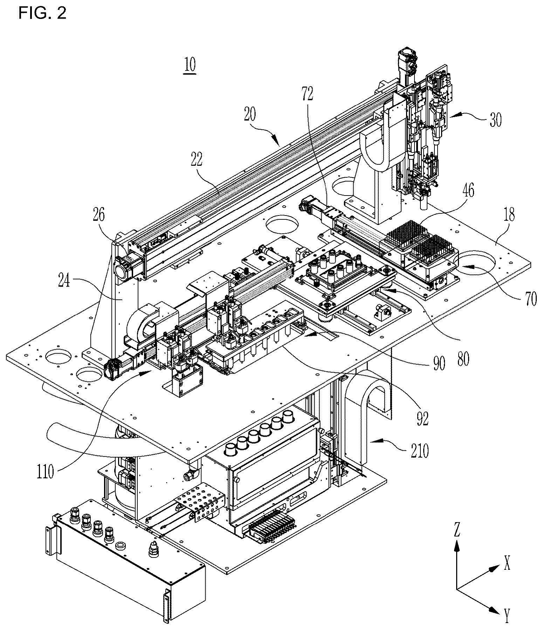

FIG. 1 is a schematic perspective view of a pre-treating system according to an embodiment of the present disclosure, and FIG. 2 is a schematic perspective view illustrating components of a pre-treating system according to an embodiment of the present disclosure, which are disposed in a housing.

As shown in FIG. 1 and FIG. 2, a pre-treating system 10 according to an embodiment of the present disclosure is provided within a housing 12, such that all processes of a pre-treating method may be automatically performed within the housing 10 without user intervention. A first door 14 is provided at the upper portion of the housing 10, allowing a user to open the first door 14 and access components (for example, components arranged on a worktable 18) provided at the upper portion of the pre-treating system 10. Similarly, a second door 16 is provided at the lower portion of the housing 10, allowing a user to open the second door 16 and access components (for example, components arranged below the worktable 18) provided at the lower portion of the pre-treating system 10. The first and second doors 14 and 16 may be closed when the pre-treating method is being performed.

The pre-treating system 10 may include a controller 11 for controlling the pre-treating system 10 to perform the pre-treating method. The controller 11 may be communicably connected to the pre-treating system 10 to control the operation of the pre-treating system 10. The controller 11 may be disposed within the housing 12 or outside the housing 12 to remotely control the pre-treating system 10. The controller 11 may be implemented as one or more processors operating according to a predetermined program, and a memory of the controller 11 stores programmed instructions for performing each step of a pre-treating method for measuring effective components in waste according to an embodiment of the present disclosure via the one or more processors. In addition, the pre-treating system 10 may further include a user interface 13 having an input interface for operating the pre-treating system 10 or for inputting process conditions, and an output interface for outputting an operating state of the pre-treating system 10.

As shown in FIG. 2, the pre-treating system 10 includes a liquid supply device provided on the upper side of the worktable 18 and a sample concentration device 210 provided on the lower side of the worktable 18.

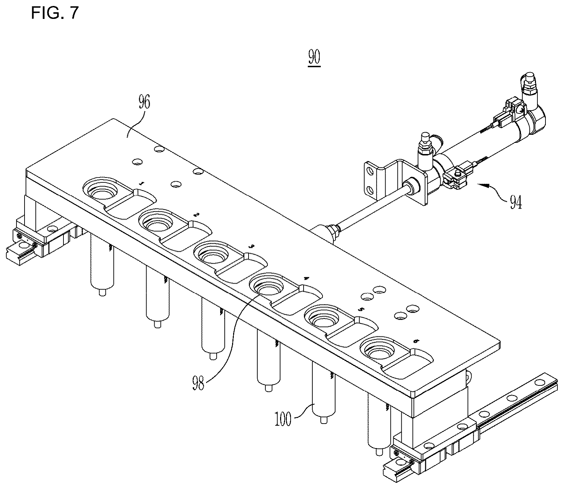

The liquid supply device is configured to inject a sample, a standard sample, a solvent, and/or a gas into a cartridge 100 (refer to FIG. 7). For this purpose, the liquid supply device includes a pipetting device transfer device 20, a pipetting device 30, a vial capping device 50, a pipette tip tray 70, a vial shaker 80, a cartridge station 90, and a cartridge purifying device 110.

As shown in FIG. 2, the pipetting device transfer device 20 is configured to transfer the pipetting device 30 in a first direction (X). The pipetting device transfer device 20 includes a pair of support frames 24 mounted on both sides of the worktable 18 in the first direction (X). Each support frame 24 extends upward in a vertical direction (Z) perpendicular to the first direction (X), allowing the pipetting device 30 to be transferred without colliding with other components.

The pipetting device transfer device 20 further includes a pipetting device transfer rail 22. The pipetting device transfer rail 22 extends in the first direction (X) and is respectively mounted on the upper portion of the pair of support frames 24. That is, one end portion of the pipetting device transfer rail 22 is mounted on the upper portion of the support frame 24 mounted on one side of the worktable 18, and the other end portion of the pipetting device transfer rail 22 is mounted on the upper portion of the support frame 24 mounted on the other side of the worktable 18.

The pipetting device transfer device 20 further includes a pipetting device transfer actuator 26. The pipetting device transfer actuator 26 is connected to the pipetting device 30 and transfers the pipetting device 30 along the pipetting device transfer rail 22 in the first direction (X) under the control of the controller 11. Here, the pipetting device transfer actuator 26 is illustrated as being mounted at one end of the pipetting device transfer rail 22, but the mounting position of the pipetting device transfer actuator 26 is not limited thereto. The pipetting device transfer actuator 26 may be mounted at an appropriate position to transfer the pipetting device 30 along the pipetting device transfer rail 22 in the first direction (X).

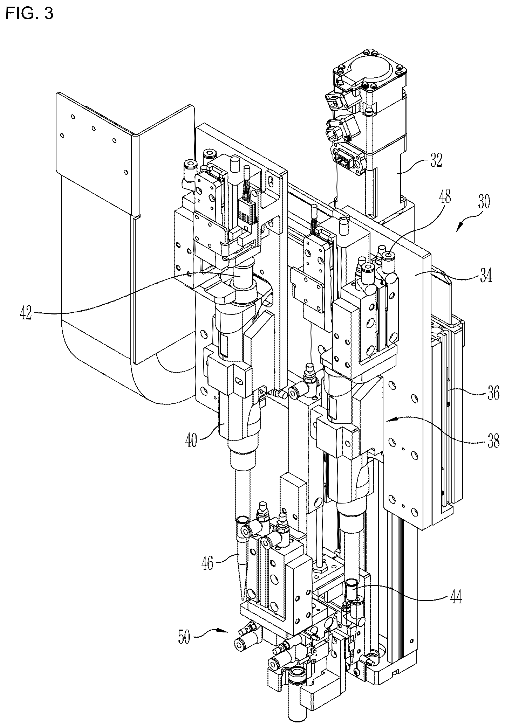

The pipetting device 30 is configured to inject a sample or a standard sample into the cartridge 100 under the control of the controller 11, and the vial capping device 50 is configured to couple a vial cap 68 to a vial 66 or to separate the vial cap 68 from the vial 66 under the control of the controller 11. The pipetting device 30 and the vial capping device 50 will be described in more detail with reference to FIG. 3 to FIG. 5.

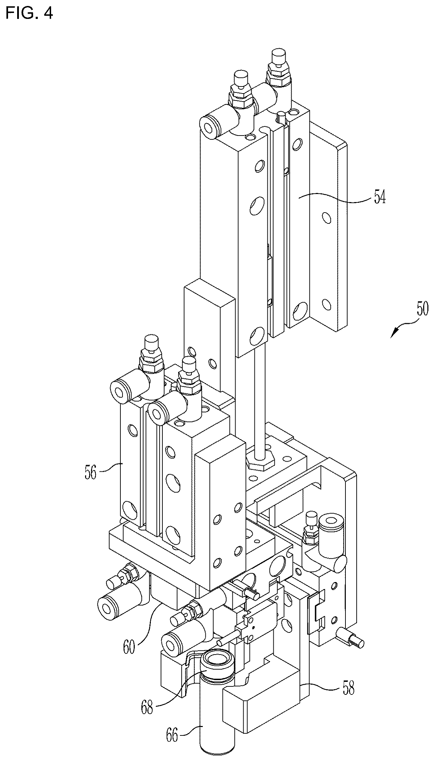

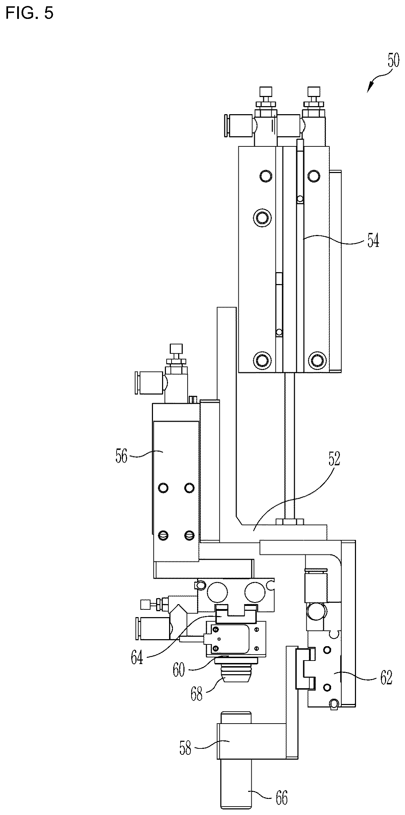

FIG. 3 is a perspective view of a pipetting device and a vial capping device according to an embodiment of the present disclosure, FIG. 4 is a perspective view of a vial capping device according to an embodiment of the present disclosure, and FIG. 5 is a side view of a vial capping device according to an embodiment of the present disclosure.

As shown in FIG. 1 and FIG. 3, the pipetting device 30 is configured to collect a sample or a standard sample from the vial 66 mounted on the vial shaker 80 and inject the collected sample or standard sample into the cartridge 100 mounted on the cartridge station 90. The pipetting device 30 includes a pipette guide frame 32, a pipette slider 34, a pipette vertical movement actuator 36, a pipette module 38, and a pipette push actuator 48.

The pipette guide frame 32 is slidably mounted on the pipetting device transfer rail 22 and is connected to the pipetting device transfer actuator 26 to move in the first direction (X) along the pipetting device transfer rail 22. The pipette guide frame 32 extends in a vertical direction (Z).

The pipette slider 34 is slidably mounted on the pipette guide frame 32. Since the pipette guide frame 32 extends in the vertical direction (Z), the pipette slider 34 is movable along the pipette guide frame 32 in the vertical direction (Z).

The pipette vertical movement actuator 36 is connected to the pipette slider 34 and is configured to move the pipette slider 34 along the pipette guide frame 32 in the vertical direction (Z) under the control of the controller 11.

The pipette module 38 is mounted on the pipette slider 34 and is movable with the pipette slider 34 in the vertical direction (Z). Since the pipette slider 34 is mounted on the pipette guide frame 32 and may move along the pipetting device transfer rail 22 in the first direction (X) together with the pipette guide frame 32, the pipette module 38 may move along the pipetting device transfer rail 22 in the first direction (X) and may move along the pipette guide frame 32 in the vertical direction (Z). Accordingly, the pipette module 38 may move along the pipetting device transfer rail 22 in the first direction (X) to be positioned on the pipette tip tray 70, the vial shaker 80, or the cartridge station 90 provided on the worktable 18, and then move in the vertical direction (Z) along the pipette guide frame 32 to perform a predetermined operation. More specifically, the pipette module 38 may descend at a position corresponding to the pipette tip tray 70 to mount a pipette tip 46, descend at a position corresponding to the vial shaker 80 to collect a sample or standard sample in the vial 66, and descend at a position corresponding to the cartridge station 90 to inject the collected sample or standard sample into the cartridge 100.

The pipette module 38 includes a pipette module body 40, a pipette piston 42, and a mounting end portion 44. The pipette module body 40 is fixedly mounted on the pipette slider 34, and the pipette piston 42 is movable in the vertical direction (Z) with respect to the pipette module body 40. The pipette piston 42 is elastically mounted on the pipette module body 40. The mounting end portion 44 is formed at the lower end portion of the pipette piston 42, and the pipette tip 46 may be mounted on the mounting end portion 44. When the pipette slider 34 moves downward while the pipette module 38 is positioned at a position corresponding to the pipette tip tray 70, the mounting end portion 44 of the pipette piston 42 is inserted into one of the pipette tips 46 mounted on the pipette tip tray 70, and the pipette tip 46 is mounted on the mounting end portion 44. Thereafter, the pipette slider 34 rises to its original position with the pipette tip 46 mounted on the mounting end portion 44.

A pipette push actuator 48 is positioned above the pipette piston 42 and is vertically movably mounted on the pipette slider 34. When the pipette push actuator 48 moves downward under the control of the controller 11 to press the upper end of the pipette piston 42, the pipette piston 42 moves relatively downward with respect to the pipette module body 40 and pushes the pipette tip 46, mounted on the mounting end portion 44, in a downward direction. If a solution is contained in the pipette tip 46, the mounting end portion 44 pushes the pipette tip 46 downward to discharge the solution contained in the pipette tip 46. When the pipette push actuator 48 moves upward under the control of the controller 11 and the force pressing the pipette piston 42 is removed, the pipette piston 42, which is elastically mounted on the pipette module body 40, moves upward and pulls the pipette tip 46, mounted on the mounting end portion 44, in an upward direction. To collect a sample or a standard sample contained in the vial 66 using the pipette tip 46, the pipette slider 34 moves down so that the lower portion of the pipette tip 46 is immersed in the solution contained in the vial 66. In this state, when the upper end of the pipette piston 42 is pressed and then released through the pipette push actuator 48, the pipette tip 46 mounted on the mounting end portion 44 is pushed downward and then pulled upward, thereby collecting the sample or standard sample from within the vial 66.

Meanwhile, while it is illustrated that two pipette modules 38 and two pipette push actuators 48 are mounted on the pipette slider 34, the number of pipette modules 38 and pipette push actuators 48 is not limited to two each. The number of pipette modules 38 and the number of pipette push actuators 48 may be the same, and one or more pipette modules 38 may be provided.

The vial capping device 50 is configured to separate the vial cap 68 from the vial 66 mounted on the vial shaker 80 or to couple the vial cap 68 to the vial 66. The vial capping device 50 may also be further configured to mount the vial 66 on the vial shaker 80 or to retrieve the vial 66 from the vial shaker 80. The vial capping device 50 may be mounted on the pipette guide frame 32 or the pipette slider 34 and may move in the first direction (X) along the pipetting device transfer rail 22. Alternatively, the vial capping device 50 may be provided at a position corresponding to the vial shaker 80.

The vial capping device 50 may include a vial capping frame 52, a vial capping device transfer actuator 54, a cap gripper transfer actuator 56, a vial grip finger 58, a vial cap gripper 60, a vial grip actuator 62, and a cap gripper actuator 64.

The vial capping device transfer actuator 54 may be mounted on the pipette guide frame 32 or the pipette slider 34 and may move along the pipetting device transfer rail 22 in the first direction (X). The vial capping device transfer actuator 54 is disposed at a different position from the pipette module 38 in the first direction (X) such that when the vial capping device transfer actuator 54 and the pipette module 38 move relative to each other, the vial capping device transfer actuator 54 and the pipette module 38 do not collide with each other. The vial capping device transfer actuator 54 transfers the vial capping frame 52 in the vertical direction (Z) under the control of the controller 11.

The vial capping frame 52 is connected to the vial capping device transfer actuator 54 and is movable in the vertical direction (Z). The cap gripper transfer actuator 56, the vial grip finger 58, the vial cap gripper 60, the vial grip actuator 62, and the cap gripper actuator 64 are mounted on the vial capping frame 52 and are movable in the vertical direction (Z) together with the vial capping frame 52. The vial capping frame 52 may include a vertical surface extending in a vertical direction (Z) and a horizontal surface extending from the lower end of the vertical surface in the first direction (X) and the second direction (Y) perpendicular to the vertical direction (Z), and the vertical surface and the horizontal surface may be integrally formed.

The cap gripper transfer actuator 56 is mounted on the vertical surface, and the cap gripper actuator 64 and the vial cap gripper 60 are mounted at the lower end thereof. The cap gripper transfer actuator 56 moves the cap gripper actuator 64 and the vial cap gripper 60 in the vertical direction (Z) under the control of the controller 11.

The cap gripper actuator 64 is mounted at the lower end of the cap gripper transfer actuator 56 to be movable in the vertical direction (Z) by the cap gripper transfer actuator 56. The cap gripper actuator 64 may move a pair of fingers of the vial cap gripper 60 toward each other to grip the vial cap 68 or move the pair of fingers of the vial cap gripper 60 away from each other to release the vial cap 68 under the control of the controller 11.

The vial cap gripper 60 is mounted at a lower end of the cap gripper actuator 64 and includes a pair of fingers. The pair of fingers of the vial cap gripper 60 is connected to the cap gripper actuator 64 and may move toward each other to grip the vial cap 68 or move away from each other to release the vial cap 68. While the vial cap gripper 60 is holding the vial cap 68, the cap gripper transfer actuator 56 may move the vial cap gripper 60 downward to couple the vial cap 68 to the vial 66 or move the vial cap gripper 60 upward to separate the vial cap 68 from the vial 66.

The vial grip actuator 62 is mounted on the horizontal surface of the vial capping frame 52 and extends to a lower position than the vial cap gripper 60 in the vertical direction (Z). A pair of vial grip fingers 58 is mounted at a lower end portion of the vial grip actuator 62, and the vial grip actuator 62 may move the pair of vial grip fingers 58 toward each other to grip the vial 66 or move the pair of vial grip fingers 58 away from each other to release the vial 66 under the control of the controller 11.

A pair of vial grip fingers 58 is mounted at a lower end portion of the vial grip actuator 62 and is connected to the vial grip actuator 62 to move toward each other to grip the vial 66 or to move away from each other to release the vial 66. The pair of vial grip fingers 58 extends toward a central axis of the vial cap 68, and the vial 66 gripped by the pair of vial grip fingers 58 may be coaxially positioned with the vial cap 68 gripped by the pair of fingers of the vial cap gripper 60.

Referring again to FIG. 2, the pipette tip tray 70, the vial shaker 80, and the cartridge station 90 are spaced apart from each other on the worktable 18. The pipette tip tray 70, the vial shaker 80, and the cartridge station 90 are arranged in the order of the pipette tip tray 70, the vial shaker 80, and the cartridge station 90 according to an operation sequence of the pipetting device 30, but the arrangement order of the pipette tip tray 70, the vial shaker 80, and the cartridge station 90 is not limited thereto. In addition, each of the pipette tip tray 70, the vial shaker 80, and the cartridge station 90 is configured to be movable in the second direction (Y).

As shown in FIG. 2, the pipette tip tray 70 is arranged at one side in the first direction (X) on the worktable 18. At least one unused pipette tip 46 is mounted on the pipette tip tray 70 and is movable in the second direction (Y) by the pipette tip tray actuator 72. For example, when the pipette tip 46 is mounted on the mounting end portion 44 of the pipette module 38, the pipette tip tray actuator 72 moves the pipette tip tray 70 to a position corresponding to a moving path of the pipette module 38 in the second direction (Y) under the control of the controller 11. Conversely, when the pipette tip 46 is not required, the pipette tip tray actuator 72 moves the pipette tip tray 70 to a standby position in the second direction (Y) under the control of the controller 11.

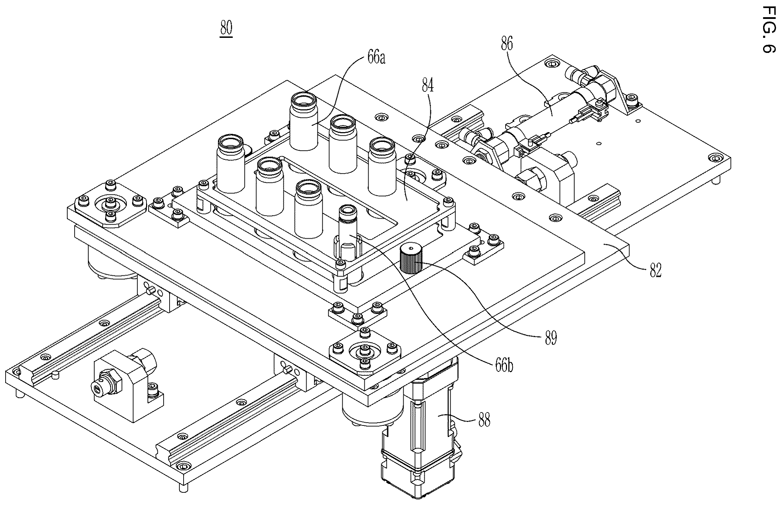

FIG. 6 is a perspective view of a vial shaker according to an embodiment of the present disclosure.

As shown in FIG. 2 and FIG. 6, the vial shaker 80 is disposed at a middle portion in the first direction (X) on the worktable 18. The vial shaker 80 holds at least one first vial 66a containing a sample to be analyzed and one second vial 66b containing a standard sample with known characteristics such as component and concentration, and shakes the held first and second vials 66a and 66b to minimize a positional deviation of the characteristics of the sample and the standard sample.

As shown in FIG. 6, the vial shaker 80 includes a shaker plate 82, a vial tray 84, a shaker transfer actuator 86, a shaking actuator 88, and a tray fixing knob 89.

The shaker plate 82 may have a substantially rectangular plate shape. One surface of the shaker plate 82 is connected to the shaker transfer actuator 86 to be movable in the second direction (Y), and a lower surface of the shaker plate 82 is connected to the shaking actuator 88 to be repeatedly shaken along a preset orbit.

The vial tray 84 may be detachably coupled to an upper surface of the shaker plate 82. The vial tray 84 is configured to hold the first and second vials 66a and 66b. The vial tray 84 is coupled to the vial plate 82 to be movable in the second direction (Y) together with the vial plate 82 and to be repeatedly shaken along the preset orbit. Accordingly, the first and second vials 66a and 66b mounted in the vial tray 84 are also repeatedly shaken along the preset orbit, and the characteristics of the sample and the standard sample in the first and second vials 66a and 66b are maintained uniformly. Although it is illustrated in FIG. 6 that six first vials 66a and one second vial 66b are provided, the number of the first and second vials 66a and 66b is not limited thereto.

The shaker transfer actuator 86 is connected to one surface of the shaker plate 82 to move the shaker plate 82 in the second direction (Y) under the control of the controller 11. For example, when collecting a sample in the first vial 66a or collecting a standard sample in the second vial 66b, the shaker transfer actuator 86 moves the shaker plate 82 to a position corresponding to a moving path of the pipette module 38 in the second direction (Y) under the control of the controller 11. Conversely, when the collection of the sample or the standard sample is not required, the shaker transfer actuator 86 moves the shaker plate 82 to a standby position in the second direction (Y) under the control of the controller 11.

The shaking actuator 88 is connected to a lower surface of the shaker plate 82 to repeatedly shake the shaker plate 82 along the preset orbit under the control of the controller 11. Accordingly, the characteristics of the sample and the standard sample in the first and second vials 66a and 66b mounted in the vial tray 84 are maintained uniformly. The shaking actuator 88 may continue to repeatedly shake the shaker plate 82 until the sample is collected from the first vial 66a or the standard sample is collected from the second vial 66b.

The tray fixing knob 89 is used to fix the vial tray 84 to the shaker plate 82 or to separate the vial tray 84 from the shaker plate 82. When the tray fixing knob 89 is rotated in one direction, the vial tray 84 may be coupled to the vial plate 82, and when the tray fixing knob 89 is rotated in the opposite direction, the vial tray 84 may be separated from the vial plate 82. The type of the tray fixing knob 89 is not particularly limited, and one of various types of tray fixing knobs 89 known to those skilled in the art may be used.

FIG. 7 is a perspective view of a cartridge station according to an embodiment of the present disclosure.

As illustrated in FIG. 2 and FIG. 7, a cartridge station 90 is disposed on the worktable 18 in the first direction (X). At least one cartridge 100 is mounted on the cartridge station 90. The cartridge 100 may be fixedly or detachably secured to the cartridge station 90.

As illustrated in FIG. 7, the cartridge station 90 may include a cartridge station actuator 94, a cartridge hold shutter 96, and a cartridge hold hole 98.

The cartridge hold shutter 96 is substantially in the shape of a rectangular plate or block, and at least one cartridge hold hole 98 is formed in the cartridge hold shutter 96. The number of cartridge hold holes 98 is the same as the number of cartridges 100. The cartridge 100 passes through the corresponding cartridge hold hole 98 and extends downwardly, and an upper end portion of the cartridge 100 may be fixed to the cartridge hold shutter 96.

The cartridge station actuator 94 is connected to one side of the cartridge hold shutter 96 and is configured to move the cartridge hold shutter 96 in the second direction (Y) under the control of the controller 11. For example, when a sample, a standard sample, or a solvent is injected into the cartridge 100, the cartridge station actuator 94 moves the cartridge hold shutter 96 in the second direction (Y) above a worktable through hole 92 formed in the worktable 18, under the control of the controller 11. Conversely, when no operation using the cartridge 100 is required, the cartridge station actuator 94 moves the cartridge hold shutter 96 in the second direction (Y) to a standby position under the control of the controller 11.

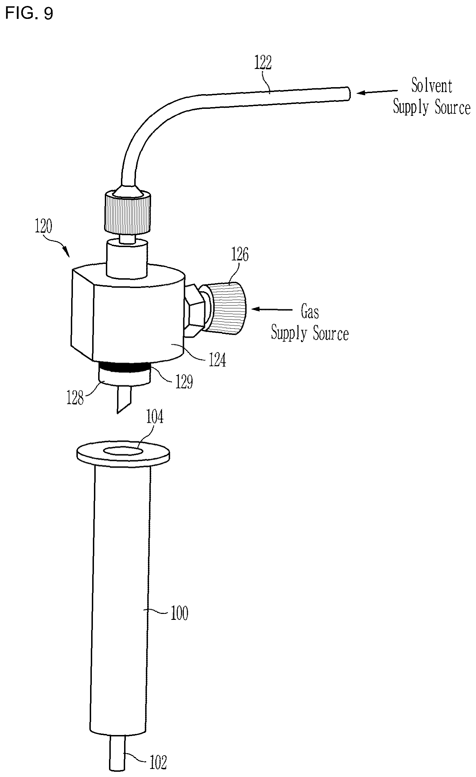

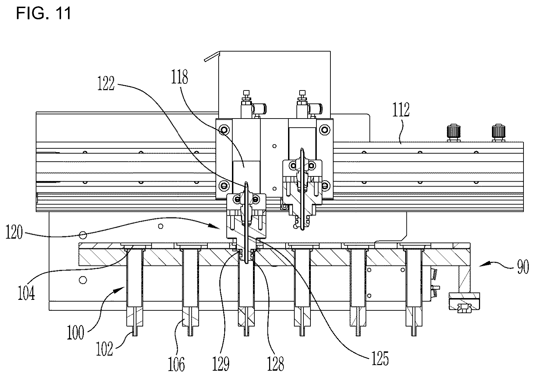

Here, with reference to FIG. 9 and FIG. 11, the cartridge 100 has a hollow cylindrical shape. A flange is formed at an upper end of the cartridge 100 to be used for securing the cartridge 100 to the cartridge hold shutter 96. An upper surface of the cartridge 100 is open to form a cartridge mounting hole 104, and a lower end portion of the cartridge 100 is provided as a cartridge end portion 102 with a small diameter, and the cartridge end portion 102 is also open in the vertical direction (Z). The diameter of the opening of the cartridge end portion 102 is sufficiently small so that the sample, standard sample, or solvent in the cartridge 100 is eluted through the cartridge end portion 102. The cartridge 100 contains a bead 106 for removing impurities that interfere with the extraction of an effective component. Typically, the bead 106 separates impurities from the effective component (for example, dioxin and the like) and adsorb the impurities to prevent them from passing through the cartridge end portion 102.

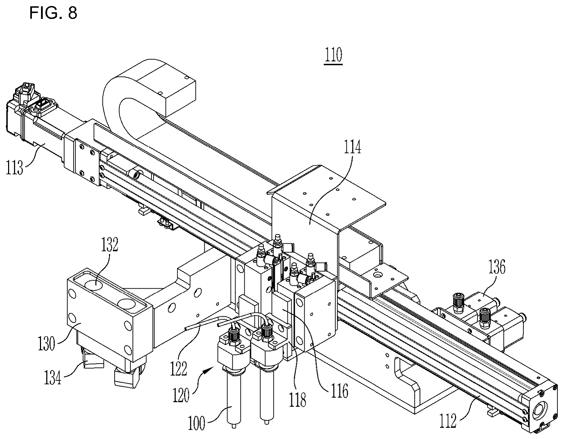

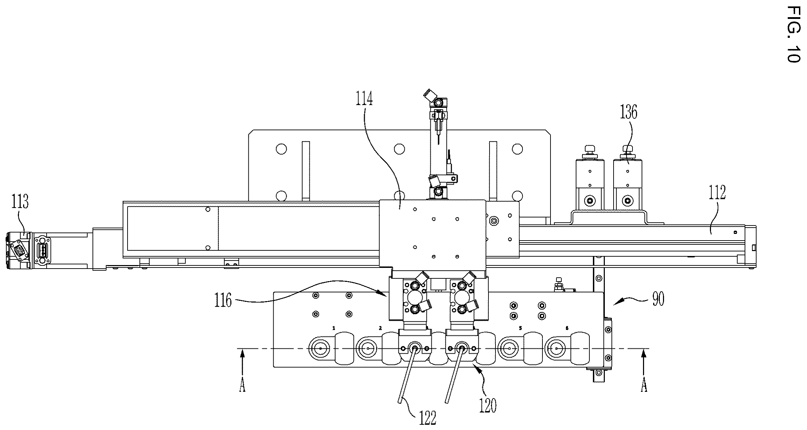

FIG. 8 is a perspective view of a cartridge purification unit according to an embodiment of the present disclosure, FIG. 9 is a perspective view of a first nozzle according to an embodiment of the present disclosure, FIG. 10 is a plan view of a cartridge purification unit according to an embodiment of the present disclosure, and FIG. 11 is a cross-sectional view taken along line A-A of FIG. 10.

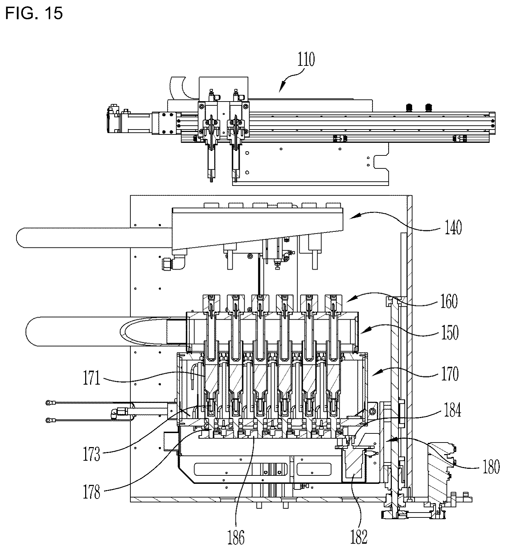

As illustrated in FIG. 1 and FIG. 8 to FIG. 11, the cartridge purifying device 110 may be configured to couple with an upper end portion of the cartridge 100 fixed to the cartridge station 90 to supply a solvent or a gas into the cartridge 100, thereby removing impurities or the like inside the cartridge 100. Furthermore, the cartridge purifying device 110 may supply a solvent or a gas into the cartridge 100 containing a sample and/or a standard sample, so that the sample and/or the standard sample inside the cartridge 100 may be eluted into a reservoir 171 (see FIG. 15). The cartridge purifying device 110 includes a purification device transfer rail 112, a purification device transfer actuator 113, a purification device sliding frame 114, a nozzle transfer actuator 116, a nozzle mounting frame 118, and a first nozzle 120. The cartridge purifying device 110 further includes a nozzle standby block 130.

The purification device transfer rail 112 extends in the first direction (X) above the worktable 18. Typically, a pair of frames spaced apart in the first direction (X) are mounted on the worktable 18, and the purification device transfer rail 112 is mounted on the upper portion of the pair of frames and disposed to extend in the first direction (X). The purification device transfer rail 112 may extend at least between the nozzle standby block 130 and the cartridge station 90 so that the first nozzle 120 may stay at the nozzle standby block 130 or the cartridge station 90.

The purification device transfer actuator 113 is mounted at one end portion of the purification device transfer rail 112 and transfers the purification device sliding frame 114 along the purification device transfer rail 112 in the first direction (X).

The purification device sliding frame 114 is movably mounted on the purification device transfer rail 112 and is connected to the purification device transfer actuator 113 to be movable in the first direction (X) along the purification device transfer rail 112. In other words, the purification device sliding frame 114 is movable in the first direction (X) along the purification device transfer rail 112 at least between the nozzle standby block 130 and the cartridge station 90.

The nozzle mounting frame 118 is movably mounted on the purification device sliding frame 114 in the vertical direction (Z) and is connected to the nozzle transfer actuator 116. The nozzle transfer actuator 116 moves the nozzle mounting frame 118 in the vertical direction (Z).

The first nozzle 120 is mounted on the nozzle mounting frame 118 and is movable in the vertical direction (Z) together with the nozzle mounting frame 118. That is, the first nozzle 120 is movable in the first direction (X) between the nozzle standby block 130 and the cartridge station 90, together with the purification device sliding frame 114 by the purification device transfer actuator 113, and is movable in the vertical direction (Z) together with the nozzle mounting frame 118 by the nozzle transfer actuator 116. Accordingly, the first nozzle 120 may move to the upper portion of the nozzle standby block 130 or the cartridge station 90 by the purification device transfer actuator 113, and may descend in the vertical direction (Z) to couple with the cartridge 100 mounted on the nozzle standby block 132 or the cartridge station 90, or may ascend in the vertical direction (Z) to separate from the cartridge 100 mounted on the nozzle standby block 132 or the cartridge station 90. As illustrated in FIG. 9, the first nozzle 120 includes a solvent supply line 122, a nozzle main body 124, a nozzle passage 125, a gas supply portion 126, and a cartridge docking portion 128.

The nozzle main body 124 is in fluid communication with a solvent supply source through the solvent supply line 122. In addition, the nozzle main body 124 is provided with the nozzle passage 125 in a downward direction. Accordingly, a solvent supplied from the solvent source to the nozzle main body 124 through the solvent supply line 122 may be sprayed into the cartridge 100 through the nozzle passage 125 to wash out impurities in the cartridge 100. The nozzle main body 124, the solvent supply line 122, or the nozzle passage 125 may be equipped with a member for pressurizing the solvent to spray the solvent, and the member for pressurizing the solvent may control the amount or speed of the solvent sprayed under the control of the controller 11. The solvent may be a substance that may remove impurities that interfere with the detection of effective components (for example, dioxin, etc.), such as methanol, toluene, or the like.

One side of the nozzle main body 124 is provided with the gas supply portion 126, and the nozzle main body 124 is connected to a gas source through the gas supply portion 126. In addition, the cartridge docking portion 128 is provided on the lower side of the nozzle main body 124. Accordingly, a gas, such as nitrogen or the like, may be introduced from the gas source into the nozzle main body 124 through the gas supply portion 126 and may be sprayed into the cartridge 100 through the cartridge docking portion 128. The cartridge docking portion 128 may be inserted into the cartridge 100 through the cartridge mounting hole 104. The cartridge docking portion 128 may be provided with a sealing member 129 so that the cartridge 100 coupled with the first nozzle 120 is sealed.

The present disclosure illustrates the cartridge purifying device 110 as including two first nozzles 120, but the number of first nozzles 120 is not limited to two. As needed, the cartridge purifying device 110 may include one or more first nozzles 120.

Meanwhile, a gas valve 136 is provided on the purification device transfer rail 112 to selectively connect or disconnect the gas source and the gas supply portion 126.

The nozzle standby block 130 is provided corresponding to one side of the purification device transfer rail 112, and when a purification step of the cartridge 100 is not in progress, the first nozzle 120 may stand by in a state of being coupled with the nozzle standby block 130.

A nozzle standby hole 132 is formed in the nozzle standby block 130 in the vertical direction (Z), and the first nozzle 120 may be inserted into the nozzle standby hole 132. A nozzle drain port 134 is provided at the lower portion of the nozzle standby hole 132, so that solvent leaking from the first nozzle 120 inserted into the nozzle standby hole 132 may be discharged through the nozzle drain port 134.

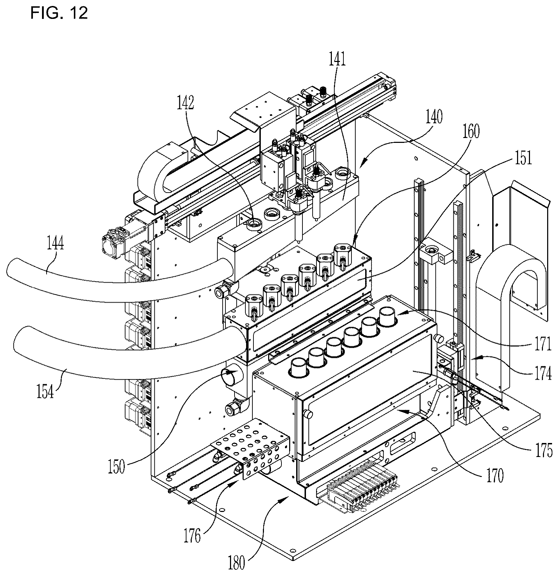

Hereinafter, a sample concentrating device will be described in detail with reference to FIG. 12 to FIG. 20.

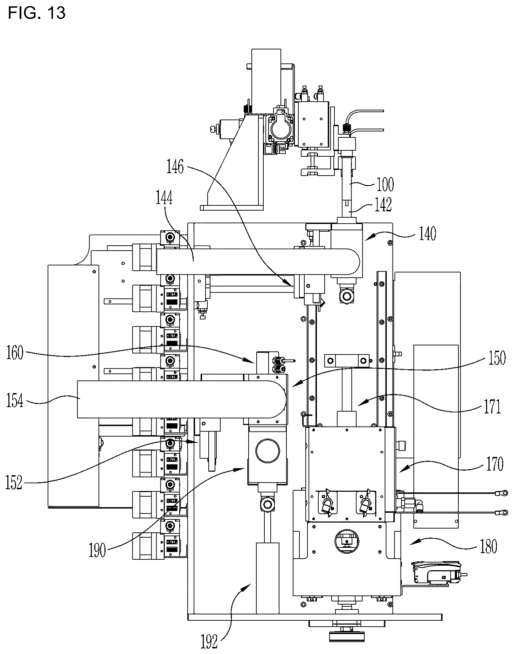

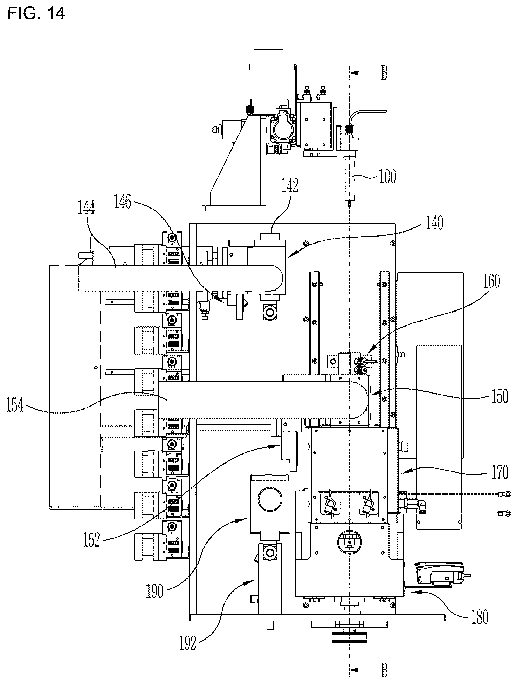

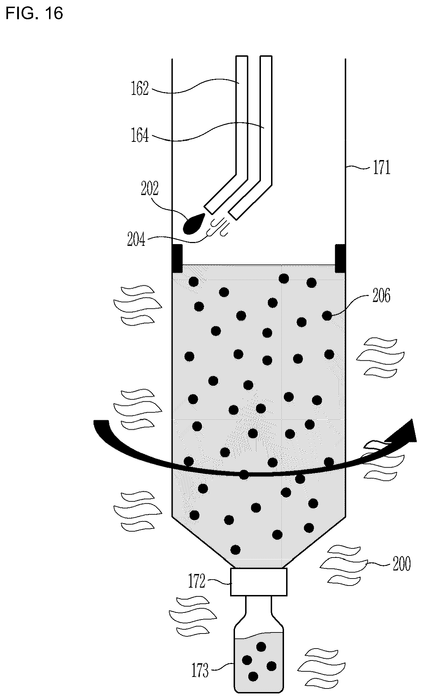

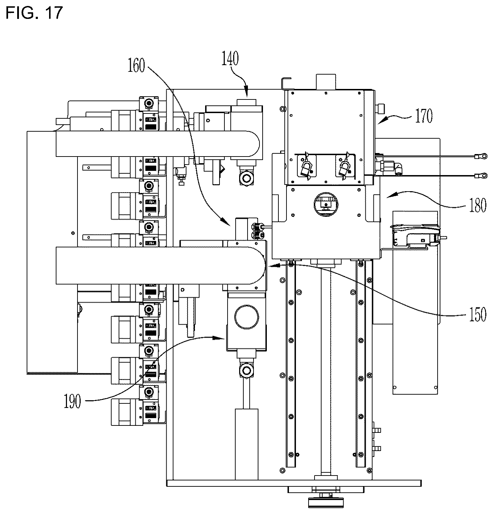

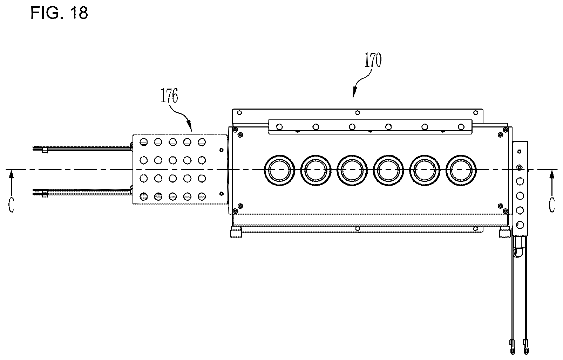

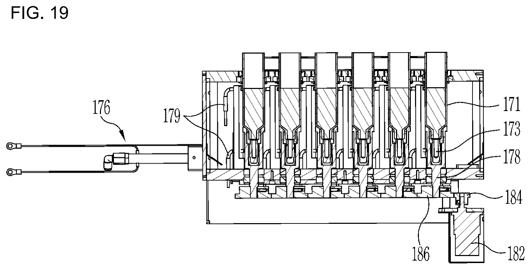

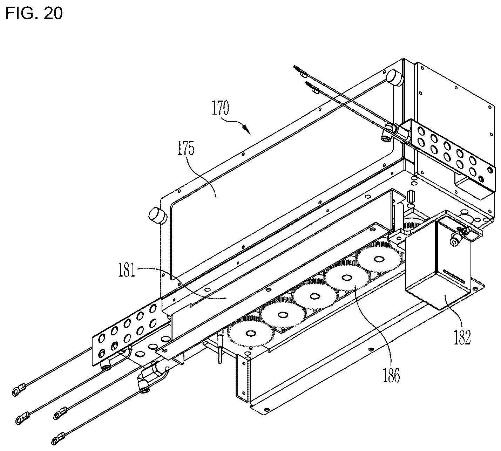

FIG. 12 is a perspective view of a sample concentration device according to an embodiment of the present disclosure, FIG. 13 is a schematic diagram illustrating an operation of a sample concentration device according to an embodiment of the present disclosure, in which a cartridge is shown in a state of being coupled to a cartridge purification unit and a conditioning drain unit, FIG. 14 is a schematic diagram illustrating an operation of a sample concentration device according to an embodiment of the present disclosure, in which a reservoir processing unit, a second nozzle, and a drying chamber are shown in a state of being coupled to each other, FIG. 15 is a cross-sectional view taken along line B-B of FIG. 14, FIG. 16 is a schematic diagram illustrating a process of concentrating an eluate according to an embodiment of the present disclosure, FIG. 17 is a schematic diagram illustrating an operation of a sample concentration device according to an embodiment of the present disclosure, in which a drying chamber is shown in a raised state, FIG. 18 is a top plan view of a drying chamber according to an embodiment of the present disclosure, FIG. 19 is a cross-sectional view taken along line C-C of FIG. 18, and FIG. 20 is a perspective view illustrating the bottom of a drying chamber according to an embodiment of the present disclosure.

As shown in FIG. 12 to FIG. 20, the sample concentrating device 210 is configured to selectively couple to the lower portion of the cartridge 100 mounted on the cartridge station 90, receive a sample and/or a standard sample from the cartridge 100, and dry the sample and/or the standard sample to concentrate the sample and/or the standard sample. In addition, the sample concentrating device 210 is further configured to selectively couple to the lower portion of the cartridge 100 mounted on the cartridge station 90 to receive a purified solvent from the cartridge 100 and discharge the solvent. For this purpose, the sample concentrating device 210 includes a conditioning drain unit 140, a reservoir processing unit 150, a drying chamber 170, and a reservoir rinse drain unit 190.

As shown in FIG. 12 to FIG. 15 and FIG. 17, the conditioning drain unit 140 is configured to couple to the lower portion of the cartridge 100, which is mounted on the cartridge station 90 and whose upper portion is coupled to the first nozzle 120, receive the purified solvent by spraying it into the cartridge 100 from the first nozzle 120, and discharge the solvent. The conditioning drain unit 140 includes a conditioning drain body 141, a cartridge drain port 142, a first drain duct 144, and a conditioning drain unit moving actuator 146.

The cartridge drain port 142 is formed in the vertical direction (Z) on the upper surface of the conditioning drain body 141. The lower end portion of cartridge 100 is inserted into the cartridge drain port 142. Accordingly, a solvent sprayed into the cartridge 100 by the first nozzle 120 coupled to the upper portion of the cartridge 100 flows into the cartridge drain port 142 through the cartridge end portion 102.

A first drain duct 144 is in fluid communication with the cartridge drain port 142, and the solvent in the cartridge drain port 142 is discharged to the outside of the sample concentrating device 210 through the first drain duct 144.

A conditioning drain unit moving actuator 146 is connected to the conditioning drain body 141 and may move the conditioning drain unit 140 in the vertical direction Z or the second direction Y. For example, when a purification step proceeds, the first nozzle 120 of the cartridge purifying device 110 moves to the upper portion of the cartridge station 90 and moves downward in the vertical direction Z to be coupled to the upper end of the cartridge 100 mounted on the cartridge station 90. In addition, the conditioning drain unit moving actuator 146 advances the conditioning drain body 141 in the second direction (Y) to position it below the corresponding cartridge 100, and then moves the conditioning drain body 141 upward in the vertical direction (Z) to couple the lower end portion of the corresponding cartridge 100 to the cartridge drain port 142. In this state, the second nozzle 120 sprays a solvent and/or a gas into the cartridge 100 to perform the purification step of the cartridge 100, and the solvent that purified the cartridge 100 flows into the cartridge drain port 142 through the cartridge end portion 102 and is then discharged to the outside through the first drain duct 144.

When the purification step is completed, the conditioning drain unit moving actuator 146 moves the conditioning drain body 141 downward in the vertical direction Z to separate the lower end portion of the cartridge 100 from the cartridge drain port 142, and then moves the conditioning drain body 141 backward in the second direction Y so that the conditioning drain unit 140 does not interfere with the operation of other components of the sample concentrating device 210.

As shown in FIG. 12 to FIG. 17, a reservoir processing unit 150 is coupled to the upper end portion of a reservoir 171 mounted in the drying chamber 170 during a concentration step to spray a solvent and a gas into the reservoir 171. In addition, the reservoir processing unit 150 is coupled to the upper portion of the reservoir rinse drain unit 190 after spraying the solvent and gas or before spraying the solvent and gas. The reservoir processing unit 150 includes a processing unit body 151, a processing unit moving actuator 152, a second drain duct 154, and a second nozzle 160.

The processing unit moving actuator 152 is connected to the processing unit body 151 and moves the processing unit body 151 in the second direction Y. For example, the processing unit moving actuator 152 advances the processing unit body 151 in the second direction (Y) to be coupled to the reservoir 171 mounted in the drying chamber 170 and moves the processing unit body 151 backward in the second direction (Y) to be coupled to the reservoir rinse drain unit 190.

The second drain duct 154 is connected to the processing unit body 151, and the solvent that evaporates during the drying/concentration process of the solution is discharged to the outside of the sample concentration device 210 through the second drain duct 154.

The second nozzle 160 is mounted on the upper surface of the processing unit body 151, and a lower portion of the second nozzle 160 extends into the processing unit body 151. A lower surface of the processing unit body 151 is opened and is selectively closed by the reservoir rinse drain unit 190 to selectively form a closed space within the processing unit body 151. The lower portion of the second nozzle 160 may be inserted into the reservoir 171 mounted in the drying chamber 170 or may be positioned in the closed space within the processing unit body 151.

The second nozzle 160 includes a solvent spraying line 162 for spraying a solvent and a gas spraying line 164 for spraying a gas. The solvent spraying line 162 is in fluid communication with a solvent supply source, and a solvent from the solvent supply source may be sprayed through the solvent spraying line 162. As shown in FIG. 16, a lower end portion of the solvent spraying line 162 is bent toward a wall of the reservoir 171 in a state in which the second nozzle 160 is coupled to the reservoir 171, so that the solvent from the solvent supply source may be sprayed toward the wall of the reservoir 171. Accordingly, an effective component attached to the wall of the reservoir 171 may be washed down by the solvent sprayed toward the wall, thereby accurately measuring an amount of the effective component. The solvent may be methanol, toluene, and the like.

The gas spraying line 164 is in fluid communication with a gas supply source, and a gas from the gas supply source may be sprayed through the gas spraying line 164. The gas may assist in drying the solvent to increase a concentration degree and a concentration speed of the solution. As shown in FIG. 16, a lower end portion of the gas spraying line 164 is bent toward the wall of the reservoir 171 in a state in which the second nozzle 160 is coupled to the reservoir 171, so that the gas from the gas supply source may be sprayed toward the wall of the reservoir 171. The gas may be nitrogen.

The second nozzle 160 may spray a preset amount of solvent at a preset speed under the control of the controller 11. In addition, the number of the second nozzles 160 may be the same as the number of the reservoirs 171 mounted in the drying chamber 170, but is not limited thereto.

At least one reservoir 171 is mounted in the drying chamber 170, and the drying chamber 170 may move in the vertical direction (Z) to be coupled to the lower end of the cartridge station 90 or to be separated from the lower end of the cartridge station 90. When the drying chamber 170 is coupled to the lower end of the cartridge station 90, an upper end of the reservoir 171 mounted in the drying chamber 170 is coupled to a lower end portion of the cartridge 100 mounted in the cartridge station 90, so that a sample and/or a standard sample in the cartridge 100 may be eluted into the reservoir 171. In addition, the drying chamber 170 may move in the vertical direction (Z) to be coupled to the lower end of the reservoir processing unit 150 or to be separated from the lower end of the reservoir processing unit 150. When the drying chamber 170 is coupled to the lower end of the reservoir processing unit 150, the upper end of the reservoir 171 mounted in the drying chamber 170 is coupled to the second nozzle 160, so that the second nozzle 160 may spray the solvent and the gas into the reservoir 171.

Here, the reservoir 171 has a hollow cylindrical shape, as shown in FIG. 15 and FIG. 16. An upper surface of the reservoir 171 is opened, and the lower end portion of the cartridge 100 or the lower end portion of the second nozzle 160 may be inserted into the reservoir 171 through the opened upper surface of the reservoir 171. A collection vial 173 is detachably coupled to a lower end of the reservoir 171 via a connector 172. The collection vial 173 is in fluid communication with the reservoir 171, so that the sample and/or the standard sample in the reservoir 171 may flow into the collection vial 173. When the sample and/or the standard sample are finally concentrated, the collection vial 173 is separated from the reservoir 171, and a pre-treating process is completed. A solution in the collection vial 173 separated from the reservoir 171 may be analyzed through an analysis device.

The drying chamber 170 includes a drying chamber moving actuator 174, a drying chamber body 175, a hot air source 176, a reservoir holder 178, and a reservoir rotating device 180.

The drying chamber moving actuator 174 is connected to the drying chamber body 175 and may move the drying chamber body 175 in the vertical direction (Z). For example, when the drying chamber moving actuator 174 moves the drying chamber body 175 upward in the vertical direction (Z), the upper end of the reservoir 171 mounted in the drying chamber 170 may be coupled to the cartridge 100 mounted in the cartridge station 90 or to the second nozzle 160. When the drying chamber moving actuator 174 moves the drying chamber body 175 downward in the vertical direction (Z), the reservoir 171 mounted in the drying chamber 170 may be separated from the cartridge 100 mounted in the cartridge station 90 or from the second nozzle 160.

The drying chamber body 175 has a hollow shape. The reservoir 171 is positioned in the drying chamber body 175 while being mounted on the reservoir holder 178, and the upper end of the reservoir 171 protrudes upward through an upper surface of the drying chamber body 175. The reservoir rotating device 180 is mounted on a lower surface of the drying chamber body 175, and the reservoir holder 178 passes through the lower surface of the drying chamber body 175 to protrude downward and is connected to the reservoir rotating device 180 and may be rotated by the reservoir rotating device 180. Accordingly, the reservoir 171 and the collection vial 173 mounted on the reservoir holder 178 also rotate together with the reservoir holder 178.

The hot air source 176 is mounted on one side of the drying chamber body 175. The hot air source 176 may blow hot air 200 into the drying chamber body 175 to dry and concentrate the solution in the reservoir 171 and the collection vial 173. In the present specification, the hot air source is disclosed as a solution concentration member for drying and concentrating the solution in the reservoir 171 and the collection vial 173, but the solution concentration member is not limited thereto, and a suitable solution concentration member known to a person skilled in the art may be used alternatively or additionally.

A level sensor 179 may be mounted in the drying chamber body 175. The level sensor 179 may detect a liquid level of the solution in the reservoir 171 and transmit a signal thereto to the controller 11. The controller 11 may terminate the concentration of the solution when the liquid level of the solution in the reservoir 171 reaches a set liquid level. Alternatively, the controller 11 may terminate the concentration of the solution when a time during which the concentration is performed reaches a set time.

The reservoir rotating device 180 is configured to rotate the reservoir 171 in the drying chamber body 175 through the reservoir holder 178. The reservoir rotating device 180 may include a housing 181, a reservoir rotating motor 182, a driving gear 184, and at least one driven gear 186.

The housing 181 is coupled to the lower surface of the drying chamber body 175 and protects the at least one driven gear 186 therein.

The reservoir rotating motor 182 is configured to rotate a motor shaft, and the driving gear 184 is mounted on the motor shaft and rotates together with the motor shaft.

The at least one driven gear 186 is engaged with each other and is arranged in a line in the housing 181. A lower end portion of the reservoir holder 178 is coupled to the center of each driven gear 186, and the reservoir holder 178 rotates together with each driven gear 186. In addition, since the reservoir 171 (and the collection vial 173 coupled to the reservoir 171) is mounted on the reservoir holder 178, the reservoir 171 rotates by the driven gear 186, and the solution in the reservoir 171 is dried and concentrated. One of the at least one driven gear 186 is engaged with the driving gear 184 to receive a rotational force from the reservoir rotating motor 182.

The reservoir rinse drain unit 190 is positioned at the rear of the drying chamber 170 and moves in the vertical direction (Z), and the reservoir rinse drain unit 190 couples with the lower end portion of the reservoir processing body 151 to close the reservoir processing body 151 or separates from the reservoir processing body 151. The reservoir rinse drain unit 190 includes a reservoir rinse drain actuator 192 for moving the reservoir rinse drain unit 190 in the vertical direction (Z). When the reservoir rinse drain actuator 192 raises the reservoir rinse drain unit 190 in the vertical direction (Z) and couples it to the lower end portion of the reservoir processing body 151, the solvent leaking from the second nozzle 160 leaks into a closed space within the processing unit body 151 and is then discharged to the outside of the sample concentration device 210 through the second drain duct 154. Conversely, when the reservoir rinse drain actuator 192 lowers the reservoir rinse drain unit 190 in the vertical direction (Z) and separates it from the lower end portion of the reservoir processing body 151, the reservoir processing unit 150 becomes movable in the second direction (Y).

Hereinafter, a pre-treating method according to another embodiment of the present disclosure will be described in detail.

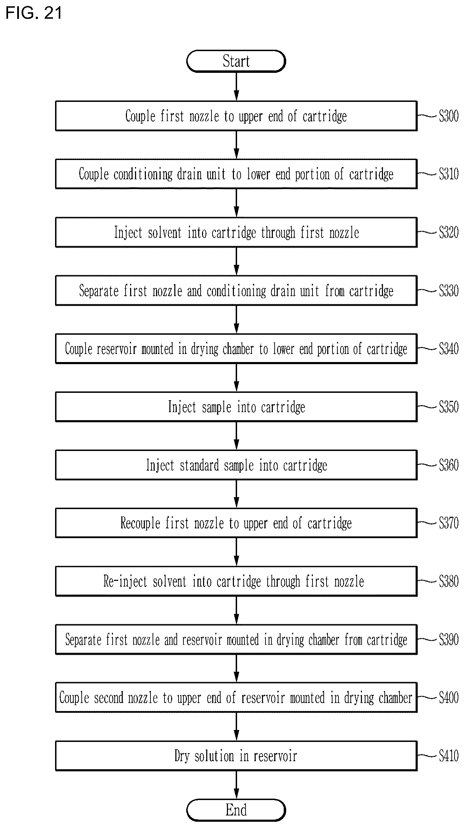

FIG. 21 is a flowchart of a pre-treating method according to another embodiment of the present disclosure.

As shown in FIG. 21, the pre-treating method according to another embodiment of the present disclosure begins by preparing the pre-treating system 10 according to the embodiment of the present disclosure. The pre-treating system 10 includes a liquid supply device and a sample concentrating device 210 positioned below the liquid supply device. The liquid supply device includes a pipetting device transfer device 20, a pipetting device 30, a vial capping device 50, a pipette tip tray 70, a vial shaker 80, a cartridge station 90, and a cartridge purifying device 110, and the sample concentrating device 210 includes a conditioning drain unit 140, a reservoir processing unit 150, a drying chamber 170, and a reservoir rinse drain unit 190.

When the pre-treating system 10 is prepared, the controller 11 operates the pre-treating system 10. More specifically, the controller 11 controls the cartridge purifying device 110 to couple the first nozzle 120 to the upper end of the cartridge 100 mounted on the cartridge station 90 (S300). That is, the first nozzle 120 is moved above the cartridge station 90 by the purification device transfer actuator 113, and then lowered in the vertical direction (Z) by the nozzle transfer actuator 116 to couple with the upper end of the cartridge 100.

In addition, the controller 11 controls the conditioning drain unit 140 to couple the conditioning drain unit 140 to the lower end portion of the corresponding cartridge 100 (S310). That is, as shown in FIG. 13, the conditioning drain unit 140 moves forward in the second direction (Y) by the conditioning drain unit moving actuator 146 and then rises again in the vertical direction (Z) to couple the lower end portion of the corresponding cartridge 100 with the cartridge drain port 142. In this state, the reservoir processing unit 150 is positioned at the rear in the second direction (Y), and the reservoir rinse drain unit 190 rises in the vertical direction (Z) to couple with the reservoir processing unit 150. That is, the reservoir processing unit 150 is in a standby state.

Here, step S300 and step S310 are not limited to the order shown in FIG. 21. That is, step S300 may be performed after step S310, or step S300 and step S310 may be performed simultaneously.

When the first nozzle 120 is coupled to the upper end of the cartridge 100 and the conditioning drain unit 140 is coupled to the lower end portion of the cartridge 100, the controller 11 injects a solvent into the cartridge 100 through the first nozzle 120 (S320). That is, a purification step of the cartridge 100 is performed. More specifically, by injecting a solvent into the cartridge 100 through the first nozzle 120, impurities within the cartridge 100 are removed and the beads 106 within the cartridge 100 are wetted. In addition, the solvent from which impurities have been removed flows to the cartridge drain port 142 through the cartridge end portion 102 and is subsequently discharged to the outside through the first drain duct 144. If necessary, a gas (for example, nitrogen or the like) may be sprayed into the cartridge 100 through the first nozzle 120.

When the purification step of the cartridge 100 is completed, the controller 11 separates the first nozzle 120 and the conditioning drain unit 140 from the cartridge 100 (S330). The first nozzle 120 rises in the vertical direction (Z), moves along the purification device transfer rail 112 in the first direction (X) to a position above the nozzle standby block 130, and then lowers in the vertical direction (Z) to wait at the nozzle standby block 130. Alternatively, the first nozzle 120 may rise in the vertical direction (Z) and then move along the purification device transfer rail 112 in the first direction (X) to a position away from the cartridge station 90. Additionally, the conditioning drain unit 140 may move backward in the second direction (Y).

After that, the drying chamber 170 rises in the vertical direction (Z) and the reservoir 171 mounted in the drying chamber 170 couples with the lower end portion of the cartridge 100 (S340). In this case, the collection vial 173 is coupled to the lower end of the reservoir 171 through the connector 172. More specifically, as shown in FIG. 17, while the conditioning drain unit 140 is in a state of moving backward in the second direction (Y) and the reservoir processing unit 150 is in a standby state coupled with the reservoir rinse drain unit 190, the drying chamber 170 is raised in the vertical direction (Z) up to the cartridge station 90 by the drying chamber moving actuator 174. In this case, the reservoir 171 mounted in the drying chamber 170 couples with the lower end portion of the cartridge 100.

With the reservoir 171 coupled to the lower end portion of the cartridge 100, the controller 11 controls the pipetting device 30 to inject a sample into the cartridge 100 (S350) and to inject a standard sample into the cartridge 100 (S360). For this purpose, at least one first vial 66a containing a sample to be analyzed and one second vial 66b containing a standard sample with known characteristics such as composition and concentration are mounted on the vial tray 84 of the vial shaker 80, and the vial shaker 80 repeatedly shakes the first and second vials 66a and 66b mounted on the vial tray 84 along a preset path to maintain a uniform characteristic of the sample and the standard sample inside the first and second vials 66a and 66b until the sample and/or standard sample are collected.

Meanwhile, if the sample and the standard sample are injected into the same reservoir 171 and concentrated together, the characteristics such as the concentration of effective components within the sample can be inferred from the measured value of the sample using the measured value of the standard sample with known characteristics such as composition and concentration. Therefore, it is preferable for the sample and the standard sample to be injected into the same reservoir 171 and concentrated together.

Additionally, the order of injecting the sample and the standard sample is not particularly limited. However, it is preferable to inject the standard sample after the sample has been injected.

To collect the sample or the standard sample, the pipette module 38 moves along the pipetting device transfer rail 22 in the first direction (X) to a position above the pipette tip tray 70 provided on the worktable 18, and it then lowers in the vertical direction (Z) along the pipette guide frame 32 to mount the pipette tip 46 mounted on the pipette tip tray 70 on the mounting end portion 44. After that, the pipette module 38 rises in the vertical direction (Z) along the pipette guide frame 32.

The pipette module 38 moves along the pipetting device transfer rail 22 in the first direction (X). In this state, the vial shaker 80 stops shaking the first and second vials 66a and 66b. Then, the pipette module 38 moves to a position above the first vial 66a of the vial shaker 80 provided on the worktable 18 and lowers in the vertical direction (Z) along the pipette guide frame 32 to submerge the lower end portion of the pipette tip 46 in the sample within the first vial 66a. In this state, when the upper end of the pipette piston 42 is pressed and then released through the pipette push actuator 48, the pipette tip 46 mounted on the mounting end portion 44 is pushed downward and then pulled upward, thereby collecting the sample in the first vial 66a. In one example, the controller 11 may control the pipette push actuator 48 to press and release the upper end of the pipette piston 42 two to three times. By this, the phenomenon of effective component 206 (for example, dioxin and the like) in the sample settling due to a difference in density may be prevented, and a sample that is as uniform as possible may be collected. After that, the pipette module 38 rises in the vertical direction (Z) along the pipette guide frame 32, and the vial shaker 80 starts shaking the first and second vials 66a and 66b mounted on the vial tray 84 again along the preset path.

The pipette module 38 moves along the pipetting device transfer rail 22 in the first direction (X) to a position above the cartridge station 90 provided on the worktable 18, and lowers in the vertical direction (Z) along the pipette guide frame 32 to insert the lower end portion of the pipette tip 46 into the cartridge 100 mounted on the cartridge station 90. In this state, when the upper end of the pipette piston 42 is pressed through the pipette push actuator 48, the sample collected in the pipette tip 46 is injected into the cartridge 100. After that, the pipette module 38 rises in the vertical direction (Z) along the pipette guide frame 32.

The pipette module 38 moves along the pipetting device transfer rail 22 in the first direction (X). In this state, the vial shaker 80 stops shaking the first and second vials 66a and 66b again. Then, the pipette module 38 moves to a position above the second vial 66b of the vial shaker 80 provided on the worktable 18 and lowers in the vertical direction (Z) along the pipette guide frame 32 to submerge the lower end portion of the pipette tip 46 in the standard sample within the second vial 66b. In this state, when the upper end of the pipette piston 42 is pressed and then released two to three times through the pipette push actuator 48, the pipette tip 46 mounted on the mounting end portion 44 is pushed downward and then pulled upward, thereby collecting the standard sample within the second vial 66b. After that, the pipette module 38 rises in the vertical direction (Z) along the pipette guide frame 32. If there are more samples left to be collected, the vial shaker 80 starts shaking the first and second vials 66a and 66b mounted on the vial tray 84 again along the preset path. Conversely, if there are no more samples left to be collected, the vial shaker 80 remains stopped.

The pipette module 38 moves along the pipetting device transfer rail 22 in the first direction (X) to a position above the cartridge station 90 provided on the worktable 18, and lowers in the vertical direction (Z) along the pipette guide frame 32 to insert the lower end portion of the pipette tip 46 into the cartridge 100 into which the sample is introduced. In this state, when the upper end of the pipette piston 42 is pressed through the pipette push actuator 48, the standard sample collected in the pipette tip 46 is injected into the cartridge 100. Then, the pipette module 38 rises in the vertical direction (Z) along the pipette guide frame 32 and moves in the first direction (X) along the pipetting device transfer rail 22 to move away from above the cartridge station 90.

The controller 11 controls the cartridge purifying device 110 to recouple the first nozzle 120 to the upper end of the cartridge 100 into which the sample and the standard sample have been introduced (S370). That is, the first nozzle 120 is moved above the cartridge station 90 by the purification device transfer actuator 113, and then lowered in the vertical direction (Z) by the nozzle transfer actuator 116 to couple with the upper end of the cartridge 100 into which the sample and the standard sample are introduced.

When the first nozzle 120 is reconnected to the upper end of the cartridge 100, the controller 11 re-injects a solvent into the cartridge 100 through the first nozzle 120 (S380). Accordingly, the solution within the cartridge 100 (including the sample and the standard sample) is eluted into the reservoir 171. If necessary, a gas (for example, nitrogen or the like) may be sprayed into the cartridge 100 through the first nozzle 120.

When the solution in the cartridge 100 has been eluted into the reservoir 171, the controller 11 separates the first nozzle 120 and the reservoir 171, which is mounted in the drying chamber 170, from the cartridge 100 (S390). More specifically, the first nozzle 120 rises in the vertical direction (Z), moves along the purification device transfer rail 112 in the first direction (X) to a position above the nozzle standby block 130, and then lowers in the vertical direction (Z) to wait at the nozzle standby block 130. Alternatively, the first nozzle 120 may rise in the vertical direction (Z) and then move along the purification device transfer rail 112 in the first direction (X) to a position away from the cartridge station 90. Additionally, the drying chamber 170 is lowered in the vertical direction (Z) by the drying chamber moving actuator 174.

Thereafter, a concentration step for the sample is performed. To this end, the controller 11 couples the second nozzle 160 to the upper end of the reservoir 171 in the drying chamber 170 (S400). More specifically, as shown in FIG. 14, the reservoir rinse drain unit 190 is lowered in the vertical direction (Z) to be separated from the reservoir processing unit 150, and the reservoir processing unit 150 moves to the front in the second direction (Y), and the drying chamber 170 rises again in the vertical direction (Z) to be coupled to the reservoir processing unit 150. Accordingly, the second nozzle 160 of the reservoir processing unit 150 is coupled to the upper end of the drying chamber 170.

In this state, the controller 11 dries the solution within the reservoir 171 (S410). As shown in FIG. 16, the solution within the reservoir 171 may be dried by rotating the reservoir 171 with hot air 200. More specifically, under the control of the controller 11, the reservoir rotating motor 182 rotates to transmit rotational force to the reservoir holder 178 through the driving gear 184 and at least one driven gear 186, thereby causing the reservoir 171 mounted on the reservoir holder 178 to rotate. In this state, the hot air source 176 blows the hot air 200 into the drying chamber body 175 to dry and concentrate the solution within the reservoir 171.

Additionally, the solvent spraying line 162 of the second nozzle 160 sprays a preset amount of solvent 202 into the reservoir 171 at a preset flow rate, and the gas spraying line 164 of the second nozzle 160 sprays the gas 204 into the reservoir 171. As shown in FIG. 16, a lower end portion of the solvent spraying line 162 is bent toward a wall of the reservoir 171 in a state in which the second nozzle 160 is coupled to the reservoir 171, so that the solvent 202 from the solvent supply source may be sprayed toward the wall of the reservoir 171. Accordingly, an effective component 206 attached to the wall of the reservoir 171 may be washed down by the solvent 202 sprayed toward the wall, thereby accurately measuring an amount of the effective component. In addition, a lower end portion of the gas spraying line 164 is bent toward the wall of the reservoir 171 in a state in which the second nozzle 160 is coupled to the reservoir 171, so that the gas 204 from the gas supply source may be sprayed toward the wall of the reservoir 171. The gas 204 may assist in drying the solvent 202 to increase the concentration of the solution and the concentration speed.

During the concentration step of the sample, the level sensor 179 may detect a liquid level of the solution in the reservoir 171 and transmit a signal thereto to the controller 11. The controller 11 may terminate the concentration of the solution when the liquid level of the solution in the reservoir 171 reaches a set liquid level. Alternatively, the controller 11 may terminate the concentration of the solution when a time during which the concentration is performed reaches a set time.

When the solution in the reservoir 171 is finally concentrated, the collection vial 173 is separated from the reservoir 171, the pre-treating process is completed, and the solution in the collection vial 173 separated from the reservoir 171 may be analyzed through an analyzing device.

Meanwhile, after the concentration of the solution is terminated, if necessary, the controller 11 may return to step S340. In this case, step S340 to step S410 may be repeated several times to obtain a sufficiently concentrated solution.

While this disclosure has been described in connection with what is presently considered to be practical embodiments, it is to be understood that the disclosure is not limited to the disclosed embodiments. On the contrary, it is intended to cover various modifications and equivalent arrangements included within the spirit and scope of the appended claims.

## Claims

1. A pre-treating system for measuring an effective component, comprising:
a cartridge station on which at least one cartridge is mounted;
a pipetting device configured to inject a sample or a standard sample into an inside of the at least one cartridge;
a vial shaker on which at least one first vial containing a sample to be analyzed and a second vial containing a standard sample having known characteristics including component and concentration are mounted, the vial shaker being configured to shake the mounted first and second vials;
a drying chamber in which at least one reservoir is mounted and configured to dry a solution in the at least one reservoir; and
a reservoir processing unit configured to be selectively coupled to the at least one reservoir to spray a solvent into the at least one reservoir,
wherein an upper end portion of the at least one reservoir is selectively coupled to a lower end portion of the at least one cartridge such that each reservoir is in fluid communication with a corresponding cartridge, and a collection vial that is in fluid communication with a corresponding reservoir is detachably coupled to a lower end of each reservoir.

2. The pre-treating system for measuring the effective component of claim 1, further comprising
a pipetting device transfer device configured to transfer the pipetting device at least between the vial shaker and the cartridge station.

3. The pre-treating system for measuring the effective component of claim 1, wherein
the pipetting device includes
a pipette module body;
a pipette piston that is relatively movable in a vertical direction with respect to the pipette module body; and
a pipette push actuator configured to be movable in the vertical direction to press an upper end of the pipette piston.

4. The pre-treating system for measuring the effective component of claim 3, wherein
the pipette push actuator presses the upper end of the pipette piston two to three times to collect the sample while a pipette tip mounted on a lower end portion of the pipette piston is immersed in the sample in the first vial.

5. The pre-treating system for measuring the effective component of claim 3, wherein
the pipette piston is elastically mounted on the pipette module body.

6. The pre-treating system for measuring the effective component of claim 1, further comprising
a cartridge purifying device configured to be selectively coupled to an upper end portion of the at least one cartridge to spray a solvent into the at least one cartridge.

7. The pre-treating system for measuring the effective component of claim 6, wherein
the cartridge purifying device is further configured to spray a gas into the at least one cartridge.

8. The pre-treating system for measuring the effective component of claim 6, further comprising
a conditioning drain unit configured to be selectively coupled to a lower end portion of at least one cartridge to discharge a solvent sprayed from the cartridge purifying device and flowing out of the cartridge.

9. The pre-treating system for measuring the effective component of claim 1, further comprising
a vial capping device configured to separate a vial cap from at least one of the first and second vials mounted on the vial shaker or couple a vial to at least one of the first and second vials.

10. The pre-treating system for measuring the effective component of claim 9, wherein
the vial capping device includes
a vial cap gripper including a pair of fingers that is able to move toward each other to grip the vial cap or move away from each other to release the vial cap;
a pair of vial grip fingers that are able to move toward each other to grip the vial or move away from each other to release the vial; and
a cap gripper transfer actuator that moves the vial cap gripper in a vertical direction.

11. The pre-treating system for measuring the effective component of claim 1, wherein
the cartridge contains beads that adsorb impurities.

12. The pre-treating system for measuring the effective component of claim 1, further comprising
a reservoir rotating device configured to be operatively connected to at least one reservoir mounted in the drying chamber to rotate the at least one reservoir.

13. The pre-treating system for measuring the effective component of claim 1, wherein
the reservoir processing unit is further configured to spray a gas into at least one reservoir.

14. The pre-treating system for measuring the effective component of claim 1, further comprising
a hot air source that supplies hot air to the drying chamber.

15. The pre-treating system for measuring the effective component of claim 1, wherein
the reservoir processing unit is configured to spray a solvent toward a wall of at least one reservoir.

16. The pre-treating system for measuring the effective component of claim 1, further comprising
a level sensor configured to measure a level of a solution in at least one reservoir.

17. The pre-treating system for measuring the effective component of claim 16, further comprising
a controller configured to be communicatively connected to the pipetting device, the vial shaker, the drying chamber, and the reservoir processing unit and to control operations of the pipetting device, the vial shaker, the drying chamber, and the reservoir processing unit.

18. A pre-treating method for measuring an effective component, comprising:
coupling at least one reservoir mounted in a drying chamber to a lower end portion of at least one cartridge mounted in a cartridge station;
injecting a sample into the at least one cartridge using a pipetting device;
injecting a standard sample into the at least one cartridge using the pipetting device;
eluting the sample and the standard sample in the at least one cartridge to at least one reservoir;
separating at least one reservoir mounted in the drying chamber from at least one cartridge; and
drying a solution in the at least one reservoir using the drying chamber.

19. The pre-treating method for measuring the effective component of claim 18, wherein
the cartridge contains beads that adsorb impurities.

20. The pre-treating method for measuring the effective component of claim 18, further comprising
collecting a sample with the pipetting device before the injecting of the sample into the at least one cartridge,
wherein the collecting of the sample with the pipetting device includes pressing an upper end of a pipette piston that is relatively movable in a vertical direction with respect to a pipette module body two to three times.

21. The pre-treating method for measuring the effective component of claim 18, further comprising
before the coupling of the at least one reservoir mounted in the drying chamber to the lower end portion of the at least one cartridge mounted in the cartridge station,
coupling a cartridge purifying device to an upper end portion of the at least one cartridge; and
spraying a solvent into the at least one cartridge using the cartridge purifying device.

22. The pre-treating method for measuring the effective component of claim 21, further comprising
before the spraying of the solvent into the at least one cartridge using the cartridge purifying device,
coupling a conditioning drain unit to a lower end portion of the at least one cartridge.

23. The pre-treating method for measuring the effective component of claim 18, wherein
the eluting of the sample and the standard sample in the at least one cartridge to the at least one reservoir includes
coupling a cartridge purifying device to an upper end portion of the at least one cartridge; and
spraying a solvent into the at least one cartridge using the cartridge purifying device.

24. The pre-treating method for measuring the effective component of claim 21 or claim 23, further comprising
spraying a gas into the at least one cartridge using the cartridge purifying device.

25. The pre-treating method for measuring the effective component of claim 18, wherein
the drying of the solution in the at least one reservoir using the drying chamber is performed by blowing hot air into the drying chamber.

26. The pre-treating method for measuring the effective component of claim 18, wherein
the drying of the solution in the at least one reservoir using the drying chamber includes rotating the at least one reservoir using a reservoir rotating device operatively connected to the reservoir.

27. The pre-treating method of claim 25 or claim 26, wherein:
the drying of the solution in the at least one reservoir using the drying chamber further includes
coupling a reservoir processing unit to the at least one reservoir; and
spraying a solvent into the at least one reservoir using the reservoir processing unit.

28. The pre-treating method for measuring the effective component of claim 27, wherein
the drying of the solution in the at least one reservoir using the drying chamber further includes spraying a gas into the at least one reservoir using the reservoir processing unit.

29. The pre-treating method for measuring the effective component of claim 18, further comprising
terminating, by a controller, the drying in response to a level of the solution in the at least one reservoir reaching a set level.

30. The pre-treating method for measuring the effective component of claim 18, further comprising
terminating, by a controller, the drying in response to a time during which the drying has been performed reaching a set time.
